(19) Europäisches Patentamt
European Patent Office
Office européen des brevets

(11) **EP 1 022 119 B1**

(12) **EUROPÄISCHE PATENTSCHRIFT**

| | |
|---|---|
| (45) Veröffentlichungstag und Bekanntmachung des Hinweises auf die Patenterteilung: **27.08.2003 Patentblatt 2003/35** | (51) Int Cl.⁷: **B29D 30/70**, B29D 30/30 |

(21) Anmeldenummer: **00100707.9**

(22) Anmeldetag: **14.01.2000**

(54) **Verfahren und Vorrichtung zur Herstellung einer Gürtelbandage eines Fahrzeugluftreifens**

Process and apparatus for the manufacture of a belt structure for a pneumatic tyre

Procédé et dispositif pour la fabrication d'une structure de ceinture pour un pneumatique

(84) Benannte Vertragsstaaten:
**DE FR GB IT**

(30) Priorität: **20.01.1999 DE 19901959**

(43) Veröffentlichungstag der Anmeldung:
**26.07.2000 Patentblatt 2000/30**

(73) Patentinhaber: **Continental Aktiengesellschaft 30165 Hannover (DE)**

(72) Erfinder: **Glinz, Michael 31535 Neustadt (DE)**

(56) Entgegenhaltungen:
EP-A- 0 288 609        EP-A- 0 344 928
DE-A- 1 429 029        US-A- 5 032 198
US-A- 5 849 121

**Beschreibung**

Die Erfindung betrifft ein Verfahren zur Herstellung einer Gürtelbandage eines Fahrzeugluftreifens durch schraubenförmiges Aufwickeln eines kontinuierlichen geförderten Bandagenstreifens gemäß dem Oberbegriff des Patentanspruchs 1. Die Erfindung betrifft ebenso eine Vorrichtung zur Herstellung einer Gürtelbandage eines Fahrzeugluftreifens gemäß dem Oberbegriff des Patentanspruchs 6.

Aus der EP 02 88 609 B1 ist ein derartiges Verfahren und eine derartige Vorrichtung bekannt. Der EP 02 88 609 B1 ist dabei die Herstellung einer gespulten Gürtelbandage zu entnehmen, bei der auf eine mit zwei Gürtellagen aufgebauten Aufbautrommel durch Drehen der Aufbautrommel kontinuierlich Bandagenmaterial von einem Spulkopf auf die Aufbautrommel aufgewickelt wird, wobei der Spulkopf seitlich bewegt wird, so daß das Bandagenmaterial schraubenförmig auf die Aufbautrommel aufgewickelt wird. Ein derartig mit einer Bandage versehenes Gürtelpaket wird üblicherweise mit dem vorgefertigen Karkassenpaket, das durch Bombage in seine Torusform gebracht wird, während der Bombage verbunden. Dabei und bei der Resterhebung, die in der Vulkanisationsmulde durch Innendruck erfolgt, wird die Bandage im Schulterbereich weniger stark gedehnt als im zentralen Bereich des Reifens. Hierdurch sind die aufgrund von Vorspannung zwischen Gürtel und Bandage den Gürtel haltenden Kräfte des Bandagenmaterials im Schulterbereich geringer als im zentralen Bereich. Bei Hochgeschwindigkeiten, bei denen große Zentrifugalkräfte das Gürtelmaterial nach außen beschleunigen, ist das so gewickelte Bandagenmaterial im Schulterbereich dehnbarer als im zentralen Mittelbereich, so daß sich im Schulterbereich der Gürtel stärker ausdehnen kann als im zentralen Mittelbereich des Gürtels. Neben der Verschlechterung der Fahreigenschaften kann dies zum Ablösen des Gürtels im Schulterbereich und somit zur Zerstörung des Reifens führen. Um dem entgegenzuwirken, ist es beispielsweise aus der EP 02 88 609 B1 bekannt, anzustreben, die Bandage im fertigen Reifen im Normalzustand auf einer Normfelge mit einem bestimmten, vorgegebenen Dehnungsverlauf, der den Erwartungen an das Wachsen des Gürtels bei Hochgeschwindigkeiten entspricht, auszustatten.

Hierzu ist es aus der EP 02 88 609 B1 bekant, den kontinuierlich geförderten Bandagenstreifen um eine Bremstrommel zu führen und anschließend über einen in seiner axialen Position veränderten Spulkopf, der zum Aufwickeln verdrehten Aufbautrommel zuzuführen. Während der Zuführung wird die axiale Position des Spulkopfs sowie die Zugspannung des Bandagenmaterials gemessen. Die gemessenen Spannungswerte werden mit Sollspannungswerten verglichen und die Spannung dementsprechend reguliert. Die Regulierung erfolgt durch Einstellen des Bremsmoments an der Bremstrommel. Hierdurch wird die Spannung bei Wicklung auf den Schulterbereich des Gürtels größer eingestellt als die Spannung bei Wicklung auf den Mittelbereich des Gürtels. Indirekt sollen hierdurch Dehnungsunterschiede durch Regelung der Spannung geregelt werden. Diese indirekte Regelung eines angestrebten Dehnungsverlauf ist jedoch nur dann zuverlässig, wenn die die Spannung und die Dehnung verbindenden Materialgrößen konstant sind. Dies wäre bei idealem Material gegeben. In der Praxis weist das Bandagenmaterial jedoch Abweichungen zumindest in einem mehr oder weniger großen Toleranzbereich auf. So kann es zu Abweichungen im Breitenverlauf, im Dickenverlauf des Bandagenstreifen sowie der Festigkeitsträger im Bandagenstreifen kommen. Es treten Abweichungen in der Verdrillung von Bandagencorden auf. Ebenso sind Abweichungen sonstiger Art des Elastizitätsmoduls beispielsweise aufgrund von Materialfehlern möglich.

Diese unter realisistischen Bedingungen auftretenden Abweichungen führen dazu, daß trotz guter Spannungsregelung bei der Wicklung der im fertigen Reifen erzielte Dehnungsverlauf vom gewünschten Dehnungsverlauf unregelmäßig abweicht. Bei Wechsel des verwendeten Bandagenmaterials, sei es hinsichtlich der Dicke oder hinsichtlich des Materials der Festigkeitsträger an sich, kann die Regulierung beim zweiten Bandagenmaterial entsprechend dem vorgegebenen Spannungsverlauf für das erste Bandagenmaterial zu einem von dem beim ersten Material erzielten Dehnungsverlauf abweichenden Dehnungsverlauf führen. Jede Änderung im verwendeten Bandagenmaterial erfordert somit eine eigenständige Vorgabe eines individuell einzustellenden Zugspannungsverlaufs.

Der Erfindung liegt daher die Aufgabe zugrunde, ein Verfahren zur Herstellung einer gespulten Gürtelbandage sowie eine Vorrichtung zur Herstellung einer gespulten Gürtelbandage zu schaffen, mit denen in einfacher Weise der Dehnungsverlauf der Bandage im fertigen Reifen genauer eingestellt werden kann.

Erfindungsgemäß wird die Aufgabe durch das Verfahren gemäß den Merkmalen von Anspruch 1 sowie durch die Vorrichtung gemäß den Merkmalen von Anspruch 6 gelöst. Durch gesteuertes Antreiben sowohl der Aufbautrommel als auch einer Umlenkrolle und durch Messen der Drehgeschwindigkeiten und Ermittlung der Differenzen der Drehgeschwindigkeiten während des Spulens und durch die Regelung der Differenzen der Drehgeschwindigkeit nach vorgegebenen Sollgeschwindigkeitsdifferenzen, die jeweils für die jeweilige axiale Position des axialen Führungsmittels vorgeben werden, wird während des Spulens direkt ein vorgegebener Dehnungsverlauf eingestellt. An den axialen Positionen der Bandage auf dem Gürtel, an denen eine höhere Dehnung eingestellt werden soll, wird beispielsweise bei einer Umlenktrommel und einer Aufbautrommel mit zylindrischem Mantel die Geschwindigkeitsdifferenz höher gewählt als an den Positionen, an denen sie geringer sein soll. Die Geschwindigkeitsdifferenz der Drehgeschwindigkeiten bewirkt unmittelbar im Bandagenmaterial die Einstellung einer gewünschten Dehnung im Bandagenmaterial. Somit ist es beispielsweise möglich, im Schulterbereich des Gürtels eine gewünschte höhere Dehnung genau einzustellen gegenüber einer gewünschte geringeren Dehnung im Mittenbereich des Gürtels. Unabhängig vom Bandagenmaterial und von realistischen Abweichungen des Bandagenmaterials wird direkt die Dehnung eingestellt. Zur Herstellung eines Fahrzeugluftreifens mit einem gewünschten Dehnungsverlauf der Bandage im fertigen Fahrzeugluftreifen wird entsprechend der erwarteten Dehnungsunterschiede, die im Anschluß an das Auflegen der Bandage während der weiteren Fertigung auftreten, ein Solldehnungsverlauf für die Bandage auf der Aufbautrommel vorgegeben. Dieser Dehnungsverlauf wird unmittelbar durch die Regelung der Differenzen der Drehgeschwindigkeiten eingestellt. Bei Änderung von Breite, Stärke, Drillung oder Art des gewählten Bandagenmaterials ist es möglich, den Solldehnungsverlauf, den das Bandagenmaterial auf der Aufbautrommel erhält, beizubehalten und somit die Regelgrößen beizubehalten.

Das Verfahren gemäß den Merkmalen von Anspruch 2 ermöglicht eine optimale Vergleichmäßigung des Dehnungsverlaufes der Bandage im fertigen Fahrzeugluftreifen. Die um 2 % höhere Dehnung in der Bandage im Schulterbereich gegenüber der Dehnung im Mittenbereich gleicht die durch die auf Erfahrungswerten beruhenden während der Bombage üblicherweise auftretende um 2 % höhere Dehnung im Mittenbereich gegenüber der auftretenden Dehnung im Schulterbereich durch Superposition im wesentlichen aus, so daß im fertigen Fahrzeugluftreifen im Normalzustand auf einer Normfelge im Schulter- und Mittenbereich eine gleichmäßige Dehnung auftritt. Bevorzugt ist es, den Dehnungsverlauf der Bandage beim Aufwickeln auf die Trommel kontinuierlich von der Mitte zur Schulter hin zunehmend auszubilden, so daß der kontinuierlich von der Mitte zur Schulter hin abnehmende während der Bombage auftretende Dehnungsverlauf in der Superposition mit dem aufgespulten Dehnungsverlauf im fertigen Reifen einen Dehnungsverlauf von im wesentlichen 0 % über die axiale Breite darstellt.

Bevorzugt wird der Dehnungsverlauf dadurch eingestellt, daß die Bahngeschwindigkeit am Wickelumfang der Aufbautrommel $V_A$ größer oder gleich der Bahngeschwindigkeit am Umlenkumfang der Umlenktrommel $V_U$ ist. Hierdurch wird eine positive Dehnung eingestellt, die bei den meisten Bandagenmaterialen beim Auflegen auf die Aufbautrommel sinnvoll ist. Bevorzugt wird hierzu als Bandagenmaterial ein Bandagenmaterial mit einem oder mehreren paralleln in Förderrichtung gerichteten organischen Festigkeitsträgern, insbesondere Fasercorde oder Monofilamente, vorzugsweise aus wärmeschrumpffähigem Nylon, aus Flat-Spot-reduzierendem Polyester oder aus Reyon verwendet.

Bei Verwendung eines Bandagenmaterials mit Festigkeitsträgern aus Aramid, das einen hohen E-Modul und auch geringes Hochgeschwindigkeitswachstum aufweist, können bei positiver Dehnung im mittleren Bandagenbereich und im Schulterbereich 2 % Dehnungsunterschiede zu großen Kräften im Material und zu Rißdehnungsgefahr führen. Daher ist es sinnvoll, bei Aramid möglichst keine Dehnung aufzubringen. Um dennoch den bei der Bombage auftretenden Dehnungsunterschieden derart entgegenzuwirken, daß im fertigen Fahrzeugluftreifen ein im wesentlichen gleichförmiger Dehnungsverlauf des Bandagenmaterials entsteht, ist es vorteilhaft, zur Wicklung die Bahngeschwindigkeit am Umlenkumfang der Umlenkrolle $V_U$ größer oder gleich der Bahngeschwindigkeit am Wickelumfang der Aufbautrommel zu wählen, so daß die Festigkeitsträger gestaucht und somit negativ gedehnt werden. Durch Voreinstellung eines Stauchungsverlaufs kann dann dem erwarteten während der weiteren Herstellung des Fahrzeugluftreifens auftretenden unterschiedlichen Dehnungsverlauf entgegengewirkt werden und durch Superposition ein gewünschter Dehnungsverlauf der Bandage im fertigen Reifen auch bei Festigkeitsträgern aus Aramid unter Vermeidung der Rißdehnungsgefahr eingestellt werden.

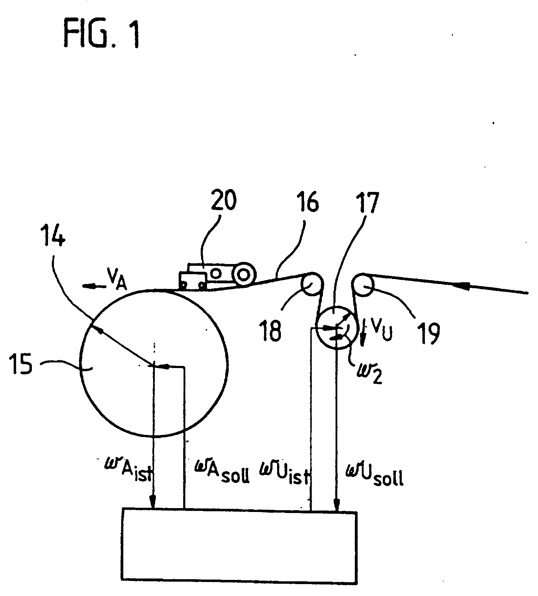

Die Erfindung wird im Folgenden anhand der in den Figuren 1 bis 9 dargestellten Ausführungsbeispielen näher erläutert.

Hierin zeigen

| | |
|---|---|
| Figur 1 | schematische Darstellung der Bandagenzuführung und -regelung. |
| Figur 2 | Darstellung gemäß Figur 1 in Draufsicht mit 2 Spulköpfen |
| Figur 3 | Darstellung gemäß Figur 1 in Draufsicht mit 1 Spulkopf |
| Figur 4 | weiteres Ausführungsbeispiel mit 2 Spulköpfen |
| Figur 5 | Fahrzeugluftreifen mit radialer Karkasse, Gürtel und Bandage in Querschnittsdarstellung mit Schnittebene durch Reifenachse |
| Figur 6 a-i | Ausführungsbeispiele zur Ausführung der Wickelbandage |
| Figur 7 | weiteres Ausführungsbeispiel gemäß Figur 1 für Materialien mit hohem E-Modul |
| Figur 8 | weitere Ausgestaltung der Ausführung von Figur 7 |
| Figur 9 | weitere Ausgestaltung der Ausführung von Figur 7 |

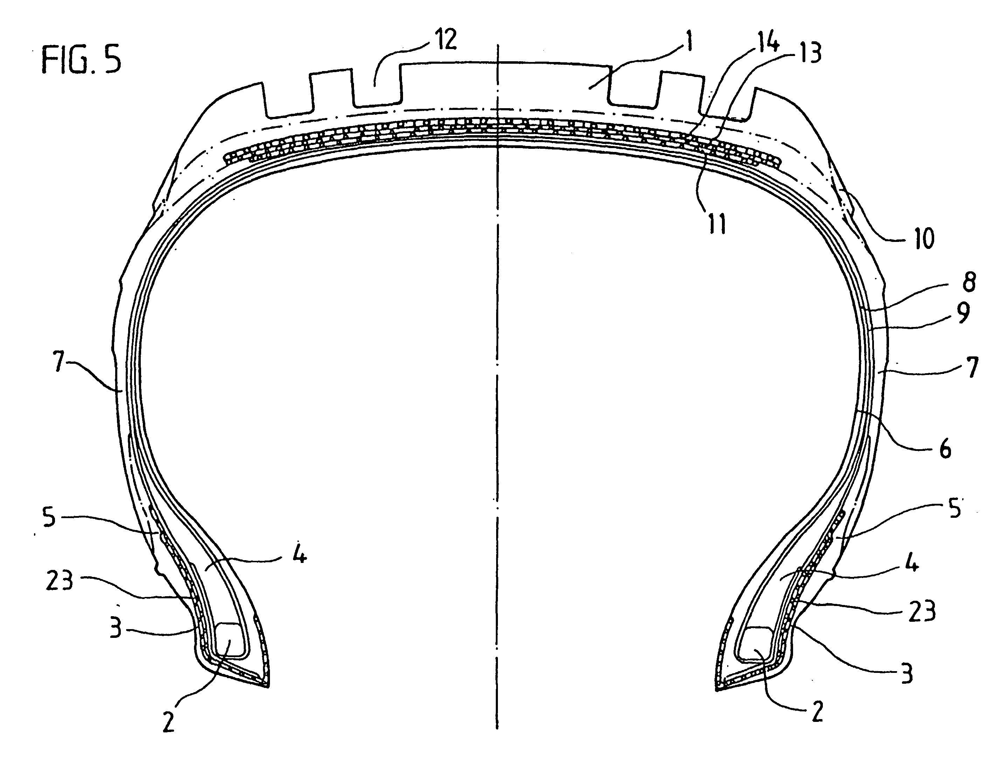

In Figur 5 ist der Aufbau eines Fahrzeugluftreifens beispielhaft dargestellt, bei dem um einen Kern 2 mit Kernprofil 4 eine erste Karkassenlage 8 außerhalb einer dichten Innenschicht 6 über den rechten Schulterbereich und die Zenitebene zu dem linken Schulterbereich und dem linken Kern 2 mit Kernprofil 4 reicht, um den sie in herkömmlicher Weise gelegt ist. Über die erste Karkassenlage 8 ist in herkömmlicher Weise eine zweite Karkassenlage 9 gelegt, die sich ebenfalls von der in Figur 5 rechts dargestellten Seite des Reifens bis zur links dargestellten Seite erstreckt. In herkömmlicher Weise ist im Kernbereich über einen Wulststreifen 23 und den Wulstverstärker 3 ein Hornprofil 5 und von diesem ausgehend bis in den Schulterbereich reichend ein Seitenstreifen 7 aufgelegt. Über den Umfang des Reifens reichen außerhalb der Karkassenlagen radialer Bauart angeordnet mehrere Stahlgürtellagen 11, 13 mit in Kautschuk eingebetteten Stahlcorden und eine Gürtelbandage 14 mit in Umfangsrichtung verlaufenden Corden. Im Schulterbereich sind zusätzlich Schulterstreifen 10 aufgelegt. Den Abschluß des Reifenaufbaus bildet in bekannter Weise ein Laufstreifen 1, der beispielsweise mit Umfangsrillen 12 profiliert ist.

Der Reifen wird beispielsweise in einem zweistufigen Verfahren hergestellt, bei dem zunächst das Karkassenpaket aus Innenschicht 6, Karkassenlagen 8, 9 und den Kernen 2 mit Wulstverstärker 3 in bekannter, nicht dargestellter Weise aufgebaut wird. Das Gürtelpaket mit den Gürtellagen 11, 13, der Gürtelbandage 14 und dem Laufstreifen 1 wird unabhängig davon auf einer in Figur 1 dargestellten Gürteltrommel 15 in bekannter Weise aufgebaut und nach Entfernen von der Gürteltrommel in bekannter, nicht dargestellter Weise axial über das Karkassenpaket radial außerhalb konzentrisch zur Karkasse angeordnet. Durch radiale Expansion der Karkasse werden Karkassenpaket und Gürtelpaket miteinander verbunden. Dabei wird die Reifentorusform erzeugt. Der fertiggestellte Reifenrohling wird in der Vulkanisationsmulde in bekannter Weise durch radiale Erhebung in die Form-gepreßt und vulkanisiert. Durch den Preßvorgang erhält die Lauffläche ihre Profilierung.

Wie in den Figuren 1 bis 4 dargestellt ist, wird die Bandage auf die auf der Gürteltrommel 15 bereits aufgebauten, nicht dargestellten Gürtellagen dadurch aufgebaut, daß das bandförmige kontinuierliche Bandagenmaterial, bestehend aus einem kontinuierlichem Band 16 mit einem oder mehreren parallelen in Kautschuk eingebetteten und in Längsrichtung des Bandes orientierten Corden durch Antreiben der Gürteltrommel 15 mit Hilfe eines nicht dargestellten Antriebsmotors mit einer Drehgeschwindigkeit ω 1 auf die Gürteltrommel aufgewickelt wird. Der Gürtelaufbautrommel in Förderrichtung des Bandes 16 vorgeordnet ist ein Spulkopf 20 bekannter Art mit nicht dargestellten axialen Führungsmitteln zur Führung des Bandes 16.

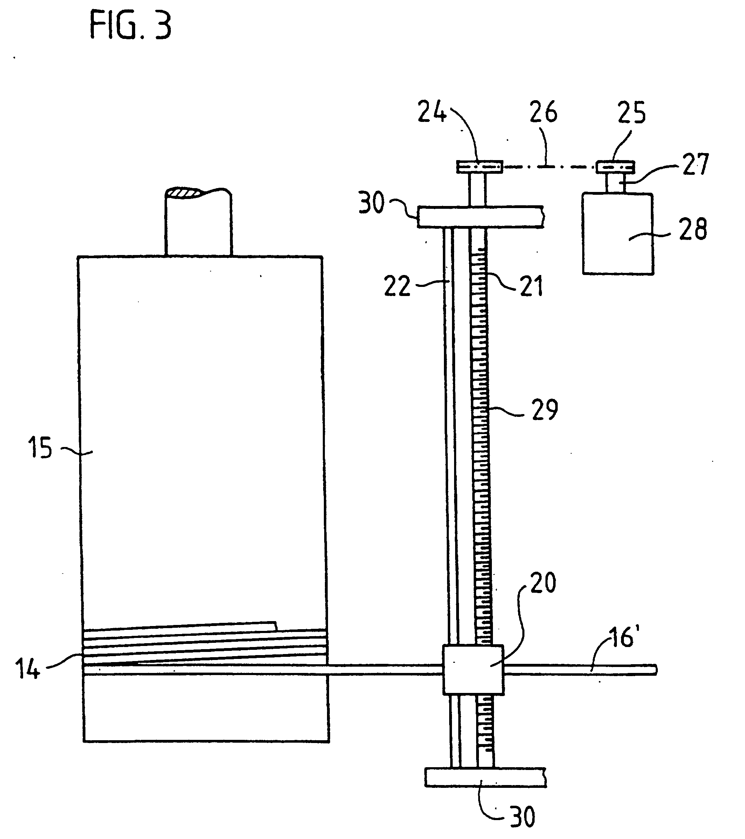

Wie in Figur 3 dargestellt ist, ist der Spulkopf 20 verschiebbar auf einer Quertraverse 22 parallel zur Achse der Gürteltrommel 15 gelagert. Mit Hilfe einer Gewindespindel 21 bekannter Art mit einem Gewinde 29, die über Zahnräder 24 und 25 und einen Zahnriemen 26 über eine Antriebswelle 27 mit einem Motor 28 gekoppelt ist, wird durch Antreiben des Motors 28 der Spulkopf 20 auf der Quertraverse 22, die in Lageböcken 30 befestigt ist, parallel zur Achse der Gürteltrommel 15 verschoben. Mit Hilfe der axialen Führungsmittel des Spulkopfes wird dabei auch das durch den Spulkopf 20 gezogene Band 16 axial mitverschoben. Auf diese Weise wird das Band 16 während des Aufwickelns auf die Gürtelaufbautrommel 15 mit einer Querkomponente in axialer Richtung beaufschlagt, wodurch das Band 16 schraubenförmig um die Gürtelaufbautrommel gewunden wird, so daß auf dem Gürtel die Bandage 14 erzeugt wird.

Dem Spulkopf 20 in Förderrichtung des Bandes vorgeordnet ist eine parallel zur Achse der Aufbautrommel drehbar gelagerte Umlenkrolle 17 ausgebildet. Durch jeweils eine dieser Umlenkrolle 17 vor- und nachgeordnete Umlenkrolle 18 bzw. 19, die parallel zur Achse der Gürteltrommel 15 frei drehbar gelagert sind, wird das Band 16, das zwischen der Umlenkrolle 17 einerseits und den Umlenkrollen 18 und 19 andererseits hindurchgeführt wird, in Antriebskontakt zur Umlenkrolle 17 gehalten. Die Umlenkrolle 17 wird über den nicht dargestellten Motor der Umlenkrolle 17 gesteuert angetrieben.

Der Antriebsmotor zum Antreiben der Gürtelaufbautrommel 15 und der Antriebsmotor zum Antreiben der Umlenkrolle 17 sowie der Motor 28 zum axialen Verschieben des Spulkopfes sind mit einem Steuerrechner verbunden. Die Steuerung erfolgt so, daß das Band 16 in der jeweiligen entsprechenden axialen Position des Spulkopfes 20 eine gewünschte Dehnung beim Aufwickeln auf die Gürtelaufbautrommel 15 erhält. Die gewünschte Dehnung des Bandes für die jeweilige axialen Position des Spulkopfes 20 wird dadurch erzeugt, daß die Bahngeschwindigkeit V 1 des Bandes 16 am Wickelumfang der Gürtelaufbautrommel 15 größer als die zeitgleiche Bahngeschwindigkeit V 2 des Bandes 16 am Umlenkumfang der Umlenkrolle 17 beträgt. Das Maß der Dehnung entspricht der Differenz Delta V = V 1 - V 2 zu diesem Zeitpunkt.

Da die Bandage, die sich in axialer Richtung, wie in Figur 5 dargestellt ist, über den gesamten Gürtel erstreckt, während der Erhebung des Reifenrohlings in der Vulkanisationsform im Kronenbereich um ca. 2 %, z.B. 2 %, stärker gedehnt wird als im Schulterbereich, wodurch bei herkömmlichen Reifen der Schulterbereich des Gürtels weniger fest bandagiert ist, so daß er sich bei Hochgeschwindigkeiten aufgrund der Zentrifugalkräfte radial erheben kann, wird beim Spulen des Bandes 16 auf die Gürtelaufbautrommel die Drehgeschwindigkeit ω 1 der Gürtelaufbautrommel 15 und die Drehgeschwindigkeit ω 2 der Umlenkrolle 17 so gewählt, daß die Differenzen der Bahngeschwindigkeiten Delta V = V 1 - V 2 bei Wicklung im Schulterbereich ebenfalls um diese 2 % größer als bei Wicklung im Kronenbereich der Gürtelaufbautrommel ist. Hierdurch wird das Band 16 im Schulterbereich mit einer um 2 % höheren Dehnung aufgewickelt als im Kronenbereich der Gürtelaufbautrommel.

Für den Reifen von Figur 5 wird hierdurch dem bei der Wicklung gemäß Figur 1 und Figur 3 erzielten Dehnungsverlauf über die Achsrichtung der Gürtelaufbautrommel mit einer um 2 % höheren Dehnung im Schulterbereich als im Kronenbereich die während der Expansion in der Reifenvulkanisationsform erzeugte Dehnung mit ca. 2 % höherer Dehnung im Reifenkronenbereich als im Schulterbereich überlagert. Die Überlagerung bewirkt, daß im fertig vulkanisierten Reifen gemäß Figur 5 im Schulter- und im Kronenbereich die Bandage gleichermaßen stark gedehnt ist. Die Bandage ermöglicht somit eine gleichmäßigere Haltewirkung über den gesamten axialen Bereich des Gürtels, so daß ein Anheben z.B. der Schulterkanten des Gürtels bei Hochgeschwindigkeiten sicherer vermieden werden kann.

Der beim Wickeln des Bandes 16 gemäß Figur 1 und Figur 3 erzeugte Dehnungsverlauf wird entsprechend dem während der Expansion des Reifens in der Reifenvulkanisationsform zu erwartenden Dehnungsverlauf so durch Steuerung der Drehgeschwindigkeiten Omega 1 und Omega 2 der Gürtelaufbautrommel bzw. der Umlenktrommel 17 eingestellt, daß er über die gesamte axiale Breite des Gürtels einen gleichmäßigen Dehnungsverlauf im fertigen vulkanisierten Reifen gemäß Figur 5 bewirkt.

Soweit der exakte Dehnungsverlauf über die axiale Breite des Gürtels, der während der Expansion in der Vulkanisationsform auftritt, nicht bekannt ist, wird das Band 16 in erster Näherung so auf die Gürtelaufbautrommel 15 gewickelt, daß es auf der Gürtelaufbautrommel im Schulterbereich ein Maximum an Dehnung und im Kronenmittenbereich in Minimum an Dehnung aufweist und zwischen dem Kronenbereich und Schulter kontinuierlich zunimmt.

In Figur 1 und 3 ist die Wicklung mit lediglich einem Spulkopf 20 über die gesamte axiale Breite dargestellt, wobei lediglich ein Band 16 schraubenförmig gewunden um die Gürtelaufbautrommel gewickelt wird, so daß es eine Bandage bildet, die sich über die gesamte axiale Breite des Gürtels erstreckt.

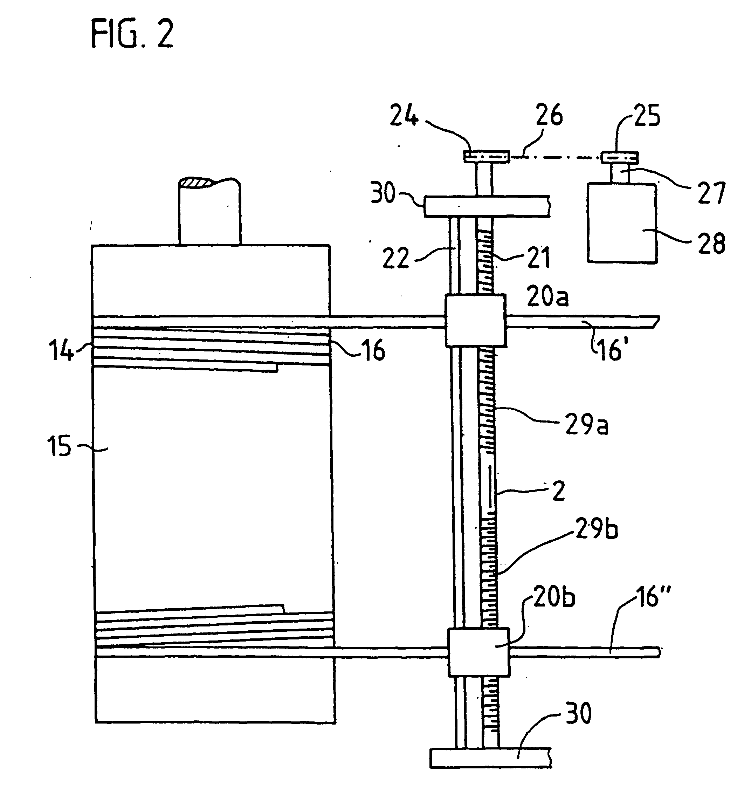

In Figur 2 ist ein anderes Ausführungsbeispiel dargestellt, bei dem zur Erhöhung der Produktivität die Wicklung mit zwei Spulköpfen 20 a und 20 b erfolgt, wobei durch Spulkopf 20 a ein Band 16' und durch Spulkopf 20 b ein Band 16'' schraubenförmig auf den auf die Gürtelaufbautrommel aufgebauten Gürtel gewunden wird, wobei der Spulkopf 20 a das Band zwischen Mittenbereich des Gürtels und rechter Schulter und der Spulkopf 20 b das Band 16'' zwischen Mittenbereich und linker Schulter des Gürtels wickelt. Beim Verdrehen der Spindel 21 mit Hilfe des Motors 28 wird der Spulkopf 20 a über ein Rechtsgewinde und der Spulkopf 20 b über ein Linksgewinde axial auf der Traverse 8 verschoben, so daß die beiden Spulköpfe in Gegenrichtung zueinander verschoben werden und somit die Wickelrichtung der Bänder 16' und 16'' ebenfalls in axialer Richtung der Aufbautrommel aufeinander zu bzw. voneinander weg gerichtet ist. Auf diese Weise kann die Gürtelbandage 15 durch symmetrisches Wickeln zweier Bänder 16' und 16'' erzeugt werden. Der Dehnungsverlauf beim Wickeln wird wie zu Figur 1 und Figur 3 beschrieben durch Steuerung der Drehgeschwindigkeiten Omega 1 und Omega 2 der Gürtelaufbautrommel bzw. der Umlenkrolle 17 in Abhängigkeit von der jeweiligen axialen Position der Spulköpfe 20 a und 20 b eingestellt. Die Spindel 21 kann auch im Ausführungsbeispiel von Figur 2 mit lediglich einem Gewinde 29 a wie in Figur 3 dargestellt ausgebildet werden. In diesem Fall werden die Spulköpfe 20 a und 20 b in die gleiche axiale Richtung verschoben bei Umdrehung der Spindel 21. Hierdurch kann eine asymmetrische Wicklung, wie im Ausführungsbeispiel von Figur 3 bereits dargestellt, mit Hilfe zweier Bänder 16' und 16'' erzielt werden.

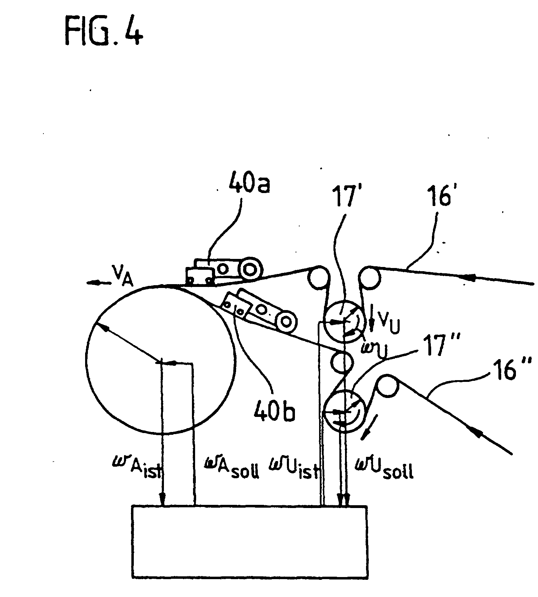

In Figur 4 ist eine weitere Ausführung der Vorrichtung zum Aufbau der Spulbandage dargestellt, wobei die Bandage ebenfalls aus zwei Bändern 16' bzw. 16'' hergestellt wird. Die beiden Spulköpfe 40 a bzw. 40 b sind jedoch jeweils auf einer eigenständigen Spindel, die nicht dargestellt ist, verschiebbar gelagert, die jeweils mit einem eigenständigen Motor zur Verschiebung angetrieben werden. Das Band 16' wird um die Umlenkrollen 17', 18', 19' und das Band 16'' um die Umlenkrollen 18'', 17'', 19'' geführt. Die Umlenkrolle 17' wird von einem eigenständigen Motor, der nicht dargestellt ist, gesteuert angetrieben. Die Umlenkrolle 17'' wird von einem anderen nicht dargestellten eigenständigen Motor gesteuert angetrieben.

In dieser Ausführungsform können die Bänder 16' und 16'' durch entsprechende Steuerung der Verschiebemotoren zum Verschieben der Spulköpfe 40 a und 40 b unabhängig voneinander in die beliebige axiale Position der Gürtelaufbautrommel verschoben werden, wobei mit Hilfe der Motoren zum Antreiben der Umlenkrolle 17' bzw. zum Antreiben der Umlkenkrolle 17'' die Drehgeschwindigkeiten Omega 2' und Omega 2'' der Umlenkrollen 17' bzw. 17'' so eingestellt werden können, daß zu jeder beliebigen Position der jeweiligen Spulköpfe 40 a und.40 b die an dieser Position des Spulkopfes für das zugehörige Band 16' bzw. 16'' gewünschte Geschwindigkeitsunterschiede Delta V' = (V 1 - V 2') bzw. Delta V'' = (V 1 - V 2'') eingestellt werden kann, so daß der Dehnungsverlauf der beiden Bänder 16' und 16'' auch unabhängig voneinander eingestellt werden kann.

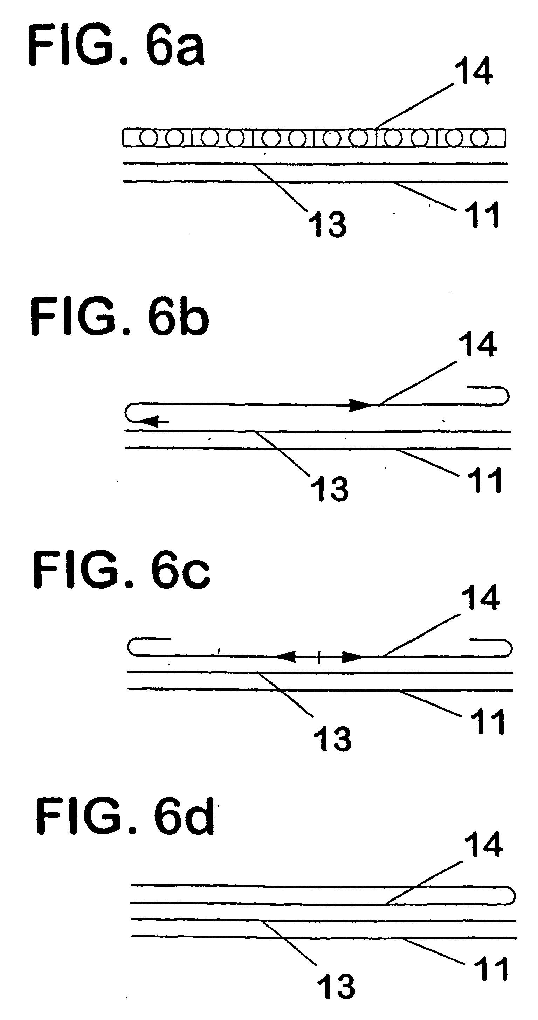

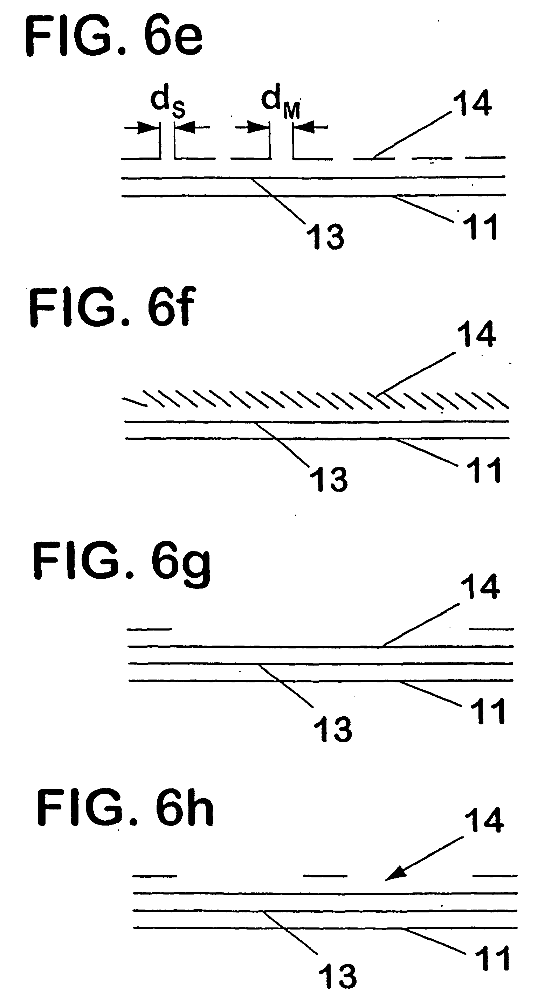

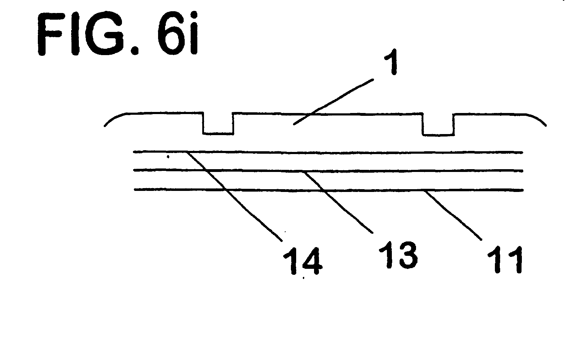

Die Bandage kann , wie in Figur 1 und Figur 6 a dargestellt, lediglich aus einer Bandagenlage bestehen, die sich über den gesamten axialen Bereich des Gürtels erstreckt. Sie kann darüber hinaus mit einem zusätzlichen Bandagenstreifen im Schulterbereich des Gürtels ausgebildet sein, wie es beispielsweise in Figur 6 e und in Figur 6 b und 6 c dargestellt ist. Dabei kann der zusätzliche Bandagenstreifen ein eigenständiger Bandagenstreifen sein, wie er in Figur 6 g dargestellt ist. Er kann aber auch durch Weiterspulen unter Richtungsumkehr des Spulkopfes erzeugt werden, wie es beispielsweise in den Figuren 6 b und 6 c dargestellt ist. Die Ausführung von Figur 6 c erfordert jedoch eine symmetrische Wicklung, wie sie beispielsweise zu Figur 2 beschrieben ist, wie sie aber auch durch eine Ausführung von Figur 1 erzielt werden kann, wobei dann mit einem Spulkopf zunächst ein erstes Band und dann mit diesem Spulkopf ein zweites Band gewickelt werden muß. Sie ist auch möglich mit Hilfe der Vorrichtung von Figur 4, mit der die Wicklung beider Bänder weitgehend unabhängig voneinander möglich ist.

Statt lediglich einen weiteren Schulterbandagestreifen aufzuwickeln, ist es auch möglich, eine zweite Bandageschicht über den gesamten Gürtelbereich zu erstrecken. Dies kann z.B. dadurch geschehen, daß über die erste Bandage eine zweite Bandage aus einem eigenständigen Bandageband gewickelt wird oder daß, wie in Figur 6 d dargestellt ist, nach Erreichen des einen Schulterbereichs durch Richtungsumkehr der Wicklungsrichtung die zweite Lage gewickelt wird.

Durch entsprechende Steuerung der Axialgeschwindigkeit der Spulköpfe ist es auch möglich, eine oder mehrere Bandagelagen so auszubilden, daß zwischen den einzelnen Wicklungen ein axialer Abstand B verbleibt, der konstant über die gesamte Gürtelbreite ist oder der, wie in Figur 6 e dargestellt ist, über die Gürtelbreite unterschiedlich ausgebildet ist. Beispielsweise ist er dann im Kronenbereich größer als im Schulterbereich oder umgekehrt im Schulterbereich größer als im Kronenbereich, je nach Anforderung an die Bandagewirkung, ausgebildet.

Die einzelnen Windungen der Bandage können nebeneinander verlaufen. Sie können auch axial schuppenförmig überlappt ausgebildet werden, wie in Figur 6 f dargestellt ist.

Figur 6 h zeigt eine Bandage, bei der zu den zusätzlichen Schulterbandagestreifen ein weiterer Mittenbandagestreifen aufgelegt ist.

Es ist auch möglich, bei breiten Umfangsrillen des Profils, wie in Figur 6 i dargestellt ist, falls festgestellt wird, daß die Breite so groß ist, daß in diesem Bereich im fertigen Reifen zu geringe Einspannung des Gürtels vorherrscht oder daß während der Formgebung in der Vulkanisationsmulde eine Verformung des Gürtels auftritt, diesen Effekten entgegenwirkend die Bandage unterhalb der Umfangsrillen mit größerer Dehnung als im umgebenden Bereich aufzuwickeln.

Die Festigkeitsträger der Bandage bestehen aus textilen Monofilamenten oder Cord aus Nylon, Polyester oder Reyon oder ähnlichen wärmeschrumpfenden zugfesten Materialien mit niederem Elastizitätsmodul.

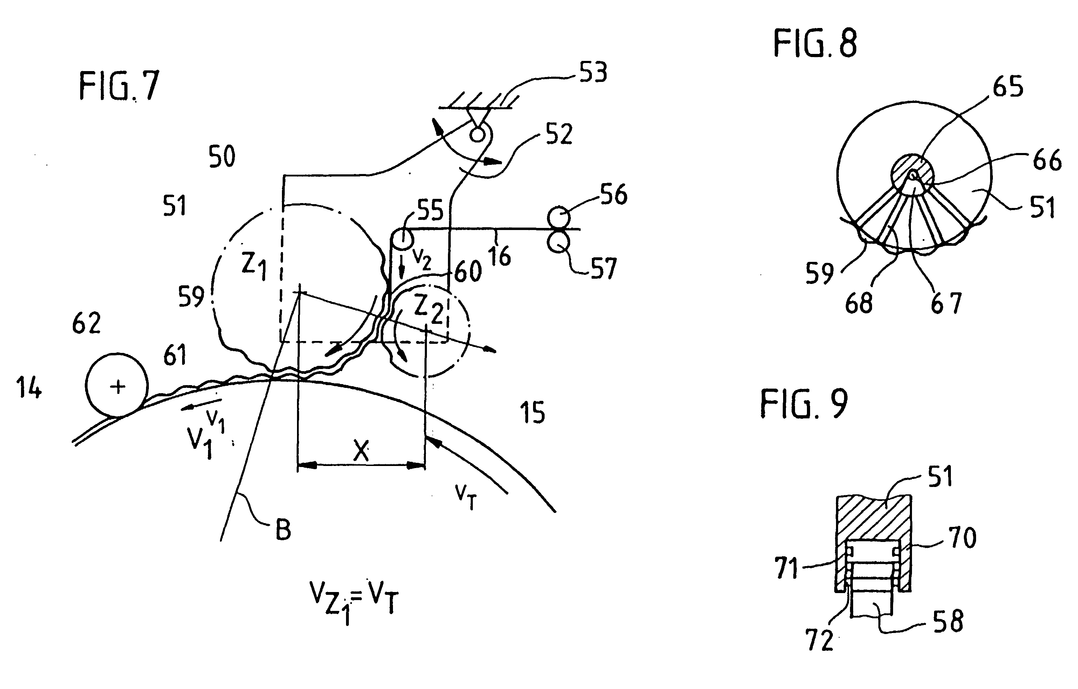

In Figur 7 ist die Herstellung einer Bandage mit Bandagestreifenmaterial dargestellt, dessen Festigkeitsträger aus textilem Monofilament oder Cordmaterial hergestellt sind, das einen hohen Elastizitätsmodul von E größer 300 mN/tex besitzt, so daß es nur gering dehnbar ist. Solche Materialien sind beispielsweise aromatische Polyamide, wie z.B. Kevlar. Kevlar weist einen E-Modul von ca. 500 mN/tex auf. Im Spulkopf 50 mit dem Gehäuse 53, der, wie in den Ausführungsbeispielen von Figur 2 bis Figur 4 axial verschiebbar ausgebildet ist, ist im Gehäuse 53 schwenkbar gelagert ein Schwenkhebel 52 ausgebildet. Im Schwenkhebel 52 ist drehbar gelagert ein Zahnrad 51 mit abgerundeten Zähnen 59. In kämmendem Kontakt zu dem Zahnrad 51 ist im Schwenkhebel 52 ein Zahnrad 54 mit kleinerem Zahnkranzdurchmesser und korrespondierend ausgebildeten abgerundeten Zähnen 58. Die Zahl der Zähne 58 ist geringer als die Zahl der Zähne 59. Das Zahnrad 51 ist über seine Achse mit einem nicht dargestellten gesteuerten Antrieb verbunden. Das Bandagematerial 16, das beispielsweise zwischen zwei Führungsrollen 56 und 57 bekannter Art um eine im Schwenkhebel 52 drehbar gelagerte Umlenkrolle 55 geführt wird, wird durch den kämmenden Bereich zwischen den Zahnrädern 51 und 54 geführt, wobei es durch das angetriebene Zahnrad 51 mit einer Bahngeschwindigkeit V 2 in den kämmenden Bereich eingezogen wird. Zwischen den Zahnrädern 51 und 54 wird das Bandagematerial 16 durch die miteinander kämmenden Zähne 58 und 59 der beiden Zahnräder 51 und 54 onduliert. Es wird vom Zahnrad 51 in Drehrichtung mitgenommen, so daß es auf die bereits auf die Gürteltrommel 15 aufgelegte Gürtellage von der angetriebenen Gürtelaufbautrommel 15 aufgewickelt wird. Das Bandagematerial 16 behält dabei seinen ondulierten Zustand im Bereich 61 im Anschluß an das Zahnrad 51 bei. Mit Hilfe einer Bügelrolle 62, die parallel zur Gürtelaufbautrommel gelagert ist und die das ondulierte Bandagematerial während des Drehens der Gürtelaufbautrommel 15 von radial außen auf die Gürteloberfläche drückt, wird das Bandagematerial unter Stauchung geglättet. Im Anschluß an die Bügelrolle 62 bildet das gestauchte Bandagematerial die Bandage 14 des Gürtels.

Das Zahnrad 51 wird so angetrieben, daß sein Zahnspitzenumfang die gleiche Umfangsgeschwindigkeit V 1 wie der Wickelumfang der Gürtelaufbautrommel 15 aufweist. Die Geschwindigkeit V 1 ist kleiner als die Einzugsgeschwindigkeit V 2 des Bandagematerials in den Umfangsbereich des Zahnrades 51.

Das Zahnrad 54 ist mit seiner Drehachse radial in Richtung der Drehachse des Zahnrades 51 gesteuert verschiebbar mit einem Verstellmotor ausgebildet. Mit Hilfe dieses Stellmotors ist der Abstand X zwischen den beiden Drehachsen der beiden Zahnräder 51 und 54 einstellbar. Hierdurch ist das Maß des Ineinandergreifens der Zähne 58 und 59 im Kämmbereich der beiden Zahnräder und somit die Amplitude der Ondulation und somit das Maß der Stauchung, die durch die Bügelrolle 62 erzeugt wird, einstellbar.

Entsprechend den zu erwartenden Dehnungen des Bandagematerials während der Ausformung in der Vulkanisationsmulde wird diesen Dehnungen entgegenwirkend mit Hilfe der Vorrichtung von Figur 7 das Bandagematerial 16 vorgestaucht. So wird beispielsweise bei Reifen, bei denen durch Ausformung und Vulkanisation im Kronenbereich eine um 2 % höhere Dehnung als im Schulterbereich erwartet wird, beim Aufspulen entsprechend der Vorrichtung von Figur 7 im Kronenbereich eine um 2 % höhere Stauchung vorgenommen als im Schulterbereich. Diese höhere Stauchung wird dadurch erreicht, daß während des Wickelns im Kronenbereich das Zahnrad 54 radial näher an das Zahnrad 51 herangeführt wird, so daß sich der Abstand X verkleinert und bei Wickeln im Schulterbereich das Zahnrad 54 weiter vom Zahnrad 51 entfernt wird, so daß sich der Abstand X vergrößert und die Ondulationsamplitude verkleinert. Hierdurch verändert sich die Einzugsgeschwindigkeit V 2. Beim Vergrößern der Ondulationsamplitude wird V 2 größer, beim Verkleinern der Ondulationsamplitude wird V 2 kleiner.

Der hierdurch beim Wickeln erzielten größeren Stauchung im Bereich der Reifenkrone gegenüber der Reifenschulter wird die während der Ausformung und Reifenvulkanisation erzeugte höhere Dehnung im Kronenbereich und die geringere Dehnung im Schulterbereich überlagert, so daß im fertigen ausvulkanisierten Reifen gemäß Figur 1 der Dehnungsverlauf der fertigen Bandage 14 über die axiale Breite des Reifens vergleichmäßigt ist.

Die Verzahnung der Zahnräder 51 und 54 ist dabei beispielsweise so gewählt, daß maximal 4 % Stauchung erreicht wird.

Selbstverständlich können auch mit Hilfe der Vorrichtung von Figur 7 oder ggfs. unter Zuhilfenahme eines zweiten Spulkopfes, der ebenfalls wie der Spulkopf von Figur 7 ausgebildet ist, alle bekannten Spulbilder, von denen beispielsweise einige in den Figuren 6 a bis 6 i dargestellt sind, hergestellt werden.

Soweit die Haltekraft zwischen der Formgebung der Zahnräder 59 des Zahnrades 51 und dem ondulierten Bandagematerial 16 nicht ausreicht, um das ondulierte Bandagematerial in onduliertem Zustand sicher aus dem Kämmungsbereich zwischen den Zahnrädern 51 bzw. 54 zur Gürtelaufbautrommel 15 zu führen, sind zusätzlich bekannte Führungseinrichtungen zur seitlichen Führung des ondulierten Bandagematerials in diesem Umlenkbereich sinnvoll.

Beispielsweise ist es denkbar, wie in Figur 8 dargestellt, die Achse 65 des Zahnrades 51 über ein Saugrohr 66 mit einer nicht dargestellten Vakuumquelle zu verbinden und das Zahnrad 51, das frei drehbar auf der Achse 65 in dieser Ausführungsform gelagert ist, mit Saugrohren 58, die radial von der Achse in den Zahnfuß hinein verlaufen, auszubilden. Über einen Umfangsabschnitt 66, der den Saugkanal 55 mit dem Zahnrad 51 verbindet und der im Umfangsbereich zwischen dem Kämmungsbereich zwischen den Zahnrädern 51 und 54 und der Verbindungslinie B, die den Achsen des Zahnrads 51 und der Gürtelaufbautrommel 15 angeordnet ist, ausgebildet ist, wird das Bandagematerial 16 in diesem Umlenkungsbereich zwischen Kämmungsbereich und zwischen Auflage auf die Gürtelaufbautrommel in onduliertem Zustand an das Zahnrad 51 angesaugt und festgehalten. In diesem Ausführungsbeispiel wird nicht das Zahnrad 51, sondern das Zahnrad 54 angetrieben.

In Figur 9 ist eine andere Ausgestaltung der Haltemittel des Zahnrades 51 dargestellt. Beidseitig des Zahnrades 51 ist jeweils ein Halteblech 70 bzw. 71 angeschraubt mit zwischen den Zähnen 59 des Zahnrades angeordneten nach innen gerichteten und in radialer Richtung über die Zahntiefe verteilten Haltenasen 72, die das Bandagematerial 16 im ondulierten Zustand im Eingriff halten. Durch das Aufwickeln des ondulierten Materials auf die Gürtelaufbautrommel wird das ondulierte Bandagematerial aus dieser mechanischen Halterung gelöst.

**Patentansprüche**

1.  Verfahren zur Herstellung einer Gürtelbandage eines Fahrzeugluftreifens durch schraubenförmiges Aufwickeln eines kontinuierlichen geförderten Bandagenstreifens auf eine mit Gürtellagen belegte Aufbautrommel,

    -  wobei das kontinuierliche Bandagenmaterial über wenigstens eine gesteuert angetriebene Umlenkrolle zur Aufbautromel gefördert, über Mittel zur gesteuerten axialen Führung der mit wenigstens einer Gürtellage belegten Aufbautrommel axial geführt zugeführt und durch Drehen der Aubautrommel und durch axiale Positionsveränderung der axialen Führung schraubenförmig auf die Aufbautrommel aufgewickelt wird,
    -  wobei die Aufbautrommel mit einer ersten gesteuerten Drehgeschwindigkeit $W_1$ verdreht wird,
    -  wobei die Umlenkrolle mit einer zweiten gesteuerten Drehgeschwindigkeit $W_2$ verdreht wird, **dadurch gekennzeichnet,**

    **dass** während des Wickelns in Abhängigkeit von der jeweiligen axialen Position der axialen Führung die Drehgeschwindigkeiten $W_1$ und $W_2$ gemessen werden und die Differenz der beiden Drehgeschwindigkeiten mit Sollwerten für die Differenz für diese axiale Führungsposition verglichen werden und etwaigen Abweichungen entgegenwirkend die Drehgeschwindigkeit $W_1$ und/oder $W_2$ geregelt wird.

2.  Verfahren gemäß den Merkmalen von Anspruch 1,

    -  wobei für die Differenzen $\Delta V = V_A - V_U$ der Bahngeschwindigkeiten am Wickelumfang der Aufbautrommel $V_A$ bzw. am Umlenkumfang der Umlenkrolle $V_U$ gilt: der Betrag

$$\frac{\Delta V_{Schulter} - \Delta V_{Mitte}}{\Delta V_{Schulter}}$$

ist kleiner oder gleich 0,05, insbesondere kleiner oder gleich 0,02

- wobei $\Delta V_{Schulter}$ die Geschwindigkeitsdifferenzen $V_A$ - $V_U$ für die Wicklung im axialen Schulterbereich der Aufbautrommel und $\Delta V_{Mitte}$ die Geschwindigkeitsdifferenzen $V_A$ - $V_U$ im zentralen Bereich der Aufbautrommel darstellen.

3. Verfahren gemäß den Merkmalen von Anspruch 2,

- wobei die Differenz $\Delta V$ jeweils die Differenz der Geschwindigkeiten $V_A$ - $V_U$ darstellt, wobei $V_A$ größer $V_U$ ist.

4. Verfahren gemäß den Merkmalen von Anspruch 1, Anspruch 2 oder Anspruch 3,

- wobei das Bandagematerial einen oder mehrere parallele in Förderrichtung gerichtete organische Festigkeitsträger aufweist, insbesondere Fasercorde oder Monofilamente, vorzugsweise aus Nylon, Polyester oder Reyon.

5. Verfahren gemäß den Merkmalen von Anspruch 2,

- wobei die Festigkeitsträger aus Aramid sind,
- wobei $\Delta V$ jeweils die Differenz der Geschwindigkeiten $V_A$ - $V_U$ darstellt, wobei $V_U$ kleiner $V_A$ ist.

6. Vorrichtung zur Herstellung einer gespulten Gürtelbandage eines Fahrzeugluftreifens durch schraubenförmiges Aufwickeln eines kontinuierlichen um wenigstens eine gesteuert angetriebene Umlenkrolle geförderten Bandagenstreifens auf eine mit Gürtellagen belegte Aufbautrommel,

- mit in ihrer Drehgeschwindigkeit $W_1$ steuerbarer Aufbautrommel,
- mit in ihrer Drehgeschwindigkeit $W_2$ steuerbarer Umlenkrolle,
- mit Mitteln zum gesteuerten axialen Führen des Bandagenmaterials während der Zuführung zur Aufbautrommel, **gekennzeichnet durch** Mittel zum Regeln der Drehgeschwindigkeiten $W_1$ und $W_2$ in Abhängigkeit von der axialen Position des axial geführten Bandagenmaterials, so daß die Differenz ($W_1$ - $W_2$) während des Wickelns einem Sollverlauf der Differenz entspricht.

## Claims

1. Method of producing a belt bandage for a pneumatic vehicle tyre by helically winding a continuous conveyed bandage strip onto a building drum covered with belt plies,

- wherein the continuous bandage material is conveyed over at least one guide roller, which is driven in a controlled manner, to the building drum, supplied in an axially guided manner via means for the controlled axial guidance of the building drum, which is covered with at least one belt ply, and helically wound onto the building drum by rotating the building drum and by changing the axial position of the axial guide,
- wherein the building drum is rotated at a first controlled rotational speed $W_1$, and
- wherein the guide roller is rotated at a second controlled rotational speed $W_2$,

**characterised in that**, during the winding in dependence on the particular axial position of the axial guide, the rotational speeds $W_1$ and $W_2$ are measured, and the difference between the two rotational speeds is compared with desired values for the difference for this axial guide position, and the rotational speed $W_1$ and/or $W_2$ is regulated so as to counteract any deviations.

2. Method according to the features of claim 1,

- wherein the following applies to the differences $\Delta V = V_A - V_U$ between the web speeds at the winding periphery of the building drum $V_A$ or respectively at the guide periphery of the guide roller $V_U$:
  the amount

$$\frac{\Delta V_{shoulder} - \Delta V_{centre}}{\Delta V_{shoulder}}$$

is smaller than or equal to 0.05, more especially smaller than or equal to 0.02, and
- wherein $\Delta V_{shoulder}$ represents the speed differences $V_A$ - $V_U$ for the winding in the axial shoulder region of the building drum, and $\Delta V_{centre}$ represents the speed differences $V_A$ - $V_U$ in the central region of the building drum.

3. Method according to the features of claim 2,

- wherein the difference $\Delta V$ represents respectively the difference in the speeds $V_A$- $V_U$, $V_A$ being greater than $V_U$.

4. Method according to the features of claim 1, claim 2 or claim 3,

- wherein the bandage material has one or more parallel organic reinforcing members, more especially fibrous cords or monofilaments, preferably formed from nylon, polyester or rayon, which reinforcing members are orientated in the direction of conveyance.

5. Method according to the features of claim 2,

   - wherein the reinforcing members are formed from aramide, and
   - wherein $\Delta V$ represents respectively the difference between the speeds $V_A$ - $V_U$, $V_U$ being smaller than $V_A$.

6. Apparatus for producing a wound belt bandage for a pneumatic vehicle tyre by helically winding a continuous bandage strip, which is conveyed around at least one guide roller which is driven in a controlled manner, onto a building drum which is covered with belt plies, said apparatus having

   - a building drum which is controllable in respect of its rotational speed $W_1$,
   - a guide roller which is controllable in respect of its rotational speed $W_2$, and
   - means for the controlled axial guidance of the bandage material during the feed to the building drum,

   **characterised by** means for regulating the rotational speeds $W_1$ and $W_2$ in dependence on the axial position of the axially guided bandage material, so that the difference ($W_1$ - $W_2$) during the winding corresponds to a theoretical development of the difference.

**Revendications**

1. Procédé de fabrication d'un bandage pneumatique d'un pneu de véhicule, par enroulement de forme hélicoïdale d'une bande de bandage pneumatique fournie en continu sur un tambour de montage recouvert de nappes de ceinture,

   - où le matériau de bandage pneumatique continu est transporté jusqu'au tambour de montage par au moins un rouleau de renvoi commandé par entraînement, acheminé en étant guidé axialement par des moyens servant au guidage axial contrôlé du tambour de montage recouvert d'au moins une nappe de ceinture et enroulé, en forme hélicoïdale, sur le tambour de montage, par rotation du tambour de montage et par modification de position axiale du guidage axial,
   - où le tambour de montage est tourné en ayant une première vitesse de rotation contrôlée $W_1$,
   - où le rouleau de renvoi est tourné en ayant une seconde vitesse de rotation contrôlée $W_2$,

   **caractérisé en ce que**, pendant l'enroulement, les

vitesses de rotation $W_1$ et $W_2$ sont mesurées en fonction de la position axiale respective du guidage axial et la différence des deux vitesses de rotation est comparée à des valeurs théoriques pour la différence concernant cette position axiale de guidage, et la vitesse de rotation $W_1$ et/ou $W_2$ est réglée en réagissant par rapport à d'éventuels écarts.

2. Procédé selon les caractéristiques de la revendication 1,

   - où, pour les différences $\Delta V = V_A$ - $V_U$ des vitesses de passage $V_A$ et $V_U$ au niveau de la circonférence d'enroulement du tambour de montage et au niveau de la circonférence de renvoi du rouleau de renvoi, s'applique le rapport :

   $$\frac{\Delta V_{\text{épaulement}} - \Delta V_{\text{milieu}}}{\Delta V_{\text{épaulement}}}$$

   dont la valeur est inférieure ou égale à 0,05, en particulier inférieure ou égale à 0,02,
   - où $\Delta V_{\text{épaulement}}$ représente les différences des vitesses $V_A$ - $V_U$ pour l'enroulement dans la zone axiale de l'épaulement du tambour de montage et $\Delta V_{\text{milieu}}$ représente les différences des vitesses $V_A$ - $V_U$ dans la zone centrale du tambour de montage.

3. Procédé selon les caractéristiques de la revendication 2,

   - où la différence $\Delta V$ représente à chaque fois la différence des vitesses $V_A$ - $V_U$, où la vitesse $V_A$ est supérieure à la vitesse $V_U$.

4. Procédé selon les caractéristiques de la revendication 1, de la revendication 2 ou de la revendication 3,

   - où le matériau du bandage pneumatique comprend une ou plusieurs nappes de renfort organiques orientées parallèlement à la direction de transport, en particulier des fils câblés en fibres ou des monofilaments, de préférence en nylon, en polyester ou en rayonne.

5. Procédé selon les caractéristiques de la revendication 2,

   - où les nappes de renfort sont en aramide,
   - où $\Delta V$ représente à chaque fois la différence des vitesses $V_A$ - $V_U$, où la vitesse $V_U$ est inférieure à la vitesse $V_A$.

6. Dispositif de fabrication d'un bandage pneumatique de ceinture enroulé d'un pneu de véhicule, par enroulement de forme hélicoïdale d'une bande de bandage pneumatique continue transportée par au moins un rouleau de renvoi commandé par entraînement, sur un tambour de montage recouvert de nappes de ceinture,

- comprenant un tambour de montage pouvant être régulé dans sa vitesse de rotation $W_1$,
- comprenant un rouleau de renvoi pouvant être régulé dans sa vitesse de rotation $W_2$,
- comprenant des moyens servant au guidage axial contrôlé du matériau du bandage pneumatique au cours de l'acheminement jusqu'au tambour de montage,

**caractérisé par** des moyens servant à réguler les vitesses de rotation $W_1$ et $W_2$, en fonction de la position axiale du matériau du bandage pneumatique guidé axialement, de sorte que la différence ($W_1 = W_2$) correspond, au cours de l'enroulement, à un profil théorique de la différence.

FIG. 1

FIG. 2

FIG. 3

# FIG.4

FIG. 5

# FIG. 6a

14

13    11

# FIG. 6b

14

13    11

# FIG. 6c

14

13    11

# FIG. 6d

14

13    11

# FIG. 6e

$d_S$ $d_M$ 14

13 11

# FIG. 6f

14

13 11

# FIG. 6g

14

13 11

# FIG. 6h

14

13 11

## FIG. 6i

14 13 11

FIG.7

FIG.8

FIG.9

$V_{Z_1} = V_T$

EP 1 022 119 B1